# FASCICULE DE BREVET EUROPEEN

(11) **EP 3 113 656 B1**
(45) Date de publication et mention de la délivrance du brevet: **16.05.2018**
(21) Numéro de dépôt: 15714567.3
(22) Date de dépôt: 04.03.2015
(51) Int. Cl.: A47J 19/02

(54) **DISPOSITIF DE PRÉPARATION D'ALIMENTS COMPORTANT UNE CHEMINÉE D'ALIMENTATION RECEVANT UN POUSSOIR ANTI DÉBORDEMENT**
VORRICHTUNG ZUR HERSTELLUNG VON NAHRUNGSMITTELN MIT EINEM ZUFUHRTRICHTER, DER EINEN ÜBERLAUFVERMEIDUNGSKOLBEN AUFNIMMT
DEVICE FOR THE PREPARATION OF FOODSTUFFS COMPRISING A SUPPLY CHUTE RECEIVING AN OVERFLOW-PREVENTING PLUNGER

(30) Priorité: 07.03.2014 FR 1451904
(43) Date de publication de la demande: 11.01.2017
(73) Titulaire: SEB S.A., 69130 Ecully (FR)
(72) Inventeur: LAFOND, Jean-Marie, 65420 Ibos (FR); PEYRAS, Lionel, 65100 Lourdes (FR)
(74) Mandataire: Bourrières, Patrice
(86) Numéro de dépôt international: PCT/FR2015/050531
(87) Numéro de publication internationale: WO 2015/132529

(56) Documents cités:
- EP-A1- 2 366 509
- EP-A1- 2 682 032
- FR-A1- 2 935 248

## Description

La présente invention concerne le domaine technique des dispositifs de préparation d'aliments comportant un poussoir pouvant être déplacé dans une cheminée pour pousser les aliments vers un outil de travail rotatif.

La présente invention concerne notamment, mais non exclusivement, les appareils électroménagers de préparation culinaire comportant un boîtier motorisé portant un accessoire amovible formant un dispositif de préparation d'aliments du type précité. La présente invention concerne également les accessoires amovibles du type précité.

La présente invention concerne notamment les dispositifs extracteurs de jus d'aliments tels que notamment les fruits ou les légumes. Lorsque le débit d"introduction d'aliments dans la cheminée est supérieur au débit d'extraction de jus du dispositif, le jus peut refluer dans la cheminée. Le mouvement du poussoir vers l'outil de travail rotatif peut favoriser des remontées incontrôlées de jus par la cheminée.

Le document KR 10-0532222B1 divulgue un appareil extracteur de jus comportant une cheminée d'introduction d'aliments recevant un poussoir présentant un joint annulaire périphérique dans sa partie inférieure. Un tel dispositif permet de limiter les remontées de liquide par la cheminée dans une certaine mesure. Toutefois si la pression du liquide est trop importante, le joint d'étanchéité peut être déformé et laisser passer un jet de liquide.

Le document CN 201213690U divulgue un appareil extracteur de jus comportant une cheminée d'introduction d'aliments recevant un poussoir présentant une partie inférieure ménageant un espace avec la cheminée, dans lequel la section du poussoir diminue au dessus de ladite partie inférieure. Une telle disposition permet de recueillir du liquide autour de la partie médiane du poussoir. Toutefois la partie inférieure du poussoir présente une section proche de celle de la cheminée, et une hauteur importante, ce qui contribue à générer un jet de liquide lors de la descente du poussoir si la quantité de liquide présente dans la cheminée est trop importante.

Un objet de la présente invention est de proposer un dispositif de préparation d'aliments comportant un poussoir pour introduire des aliments dans une cheminée, qui soit bien adapté à la transformation d'aliments mous et/ou juteux.

Cet objet est atteint avec un dispositif de préparation d'aliments comprenant :
- un outil de travail rotatif selon un axe de rotation,
- une enceinte de travail logeant l'outil de travail, l'enceinte de travail présentant une cheminée pour introduire les aliments à transformer,
- un poussoir pouvant être déplacé dans la cheminée pour pousser les aliments vers l'outil de travail, le poussoir comprenant une paroi inférieure présentant une face inférieure pour pousser les aliments vers l'outil de travail, la paroi inférieure étant reliée à une partie supérieure de préhension par au moins un montant, la section du ou des montants étant inférieure à la section de la paroi inférieure,
du fait que la paroi inférieure du poussoir présente une épaisseur inférieure au jeu maximal entre la cheminée et la paroi inférieure. L'épaisseur réduite de la paroi inférieure du poussoir au niveau du jeu maximal avec la cheminée permet de réduire la vitesse des jets de liquides susceptibles de remonter par la cheminée lors de la descente du poussoir dans la cheminée et de la transformation des aliments par l'outil de travail rotatif. Le risque de projections à l'extérieur de la cheminée peut ainsi être limité. Un dispositif de préparation d'aliments bien adapté à la transformation d'aliments mous et/ou juteux peut ainsi être obtenu.

Selon une forme de réalisation avantageuse, l'enceinte de travail présente une restriction en aval de l'outil de travail, la section de la restriction étant inférieure à la section de la cheminée. Une telle restriction est susceptible de favoriser la rétention de liquide à l'intérieur de l'enceinte de travail en amont de l'outil de travail. L'ajout de nouveaux aliments par la cheminée peut favoriser les remontées de liquides par la cheminée.

Selon un mode de réalisation, un organe de filtration sépare l'enceinte de travail en une partie amont logeant l'outil de travail et une partie aval présentant une sortie d'écoulement pour évacuer les jus résultant de la transformation des aliments. L'organe de filtration forme une restriction favorisant la rétention de liquide à l'intérieur de l'enceinte de travail en amont de l'outil de travail.

Avantageusement encore, le poussoir présente une partie supérieure d'obturation pouvant être déplacée en translation dans la cheminée sur une hauteur supérieure à l'épaisseur de la paroi inférieure, et de préférence 1,5 fois supérieure à l'épaisseur de la paroi inférieure. Cette disposition contribue à confiner à l'intérieur de la cheminée les aliments transformés remontés au dessus de la paroi inférieure du poussoir.

Avantageusement encore, la cheminée présente au moins une butée latérale interne entravant la rotation du poussoir introduit dans la cheminée. Le poussoir peut ainsi être déplacé dans la cheminée vers l'outil de travail en limitant les mouvements de rotation parasites du poussoir autour de la direction d'évolution du poussoir vers l'outil de travail.

Avantageusement alors, la ou au moins l'une des butées latérales internes s'étend sur toute la hauteur de la cheminée. Le poussoir peut ainsi être déplacé dans la cheminée vers l'outil de travail en limitant les mouvements de rotation parasites du poussoir dès l'introduction du poussoir dans la cheminée.

Avantageusement encore, la cheminée et la paroi inférieure présentent chacune deux facettes de guidage en translation opposées. Cette disposition permet de favoriser un bon guidage en translation de la paroi inférieure dans la cheminée, en limitant la rotation du poussoir à l'intérieur de la cheminée.

Selon une forme de réalisation, la paroi inférieure présente un bord antérieur et un bord postérieur ajustés avec la cheminée, et deux bords latéraux intercalés avec le bord antérieur et le bord postérieur, et le jeu maximal entre la cheminée et la paroi inférieure est agencé entre la cheminée et au moins l'un des bords latéraux.

Avantageusement encore, la paroi inférieure présente une épaisseur supérieure au jeu minimal entre la cheminée et la paroi inférieure. Cette disposition permet de favoriser un bon guidage en translation de la paroi inférieure dans la cheminée.

Avantageusement encore, la paroi inférieure présente une face supérieure libre entourant le ou les montants. Cette disposition permet de favoriser la répartition des aliments transformés au dessus de la paroi inférieure.

Avantageusement encore, la paroi inférieure présente une bordure inférieure chanfreinée au niveau du jeu maximal avec la cheminée. Cette disposition permet de réduire la hauteur de la paroi inférieure au niveau du jeu maximal avec la cheminée, ce qui contribue à limiter la formation d'un jet directionnel d'aliments transformés à l'intérieur de la cheminée lors de la descente du poussoir dans la cheminée.

Avantageusement encore, la face inférieure de la paroi inférieure présente une géométrie incurvée concave. Cette disposition permet de limiter le jeu entre la face inférieure et l'outil de travail.

Avantageusement encore, la face inférieure de la paroi inférieure présente au moins un organe de retenue. Cette disposition permet d'améliorer l'efficacité de la transformation des aliments par l'outil de travail rotatif.

Avantageusement alors, le ou les organes de retenue s'étendent longitudinalement par rapport à l'axe de rotation de l'outil de travail. L'outil de travail rotatif défile alors transversalement par rapport à la direction d'extension du ou des organes de retenue. La pression exercée par le poussoir sur les aliments à transformer évolue ainsi par rapport à la direction d'évolution de l'outil de travail rotatif. Cette disposition contribue à améliorer l'efficacité de la transformation des aliments par l'outil de travail rotatif.

Selon une forme de réalisation, l'outil de travail rotatif comporte une extrémité d'entraînement et une paroi latérale présentant au moins un organe de travail externe défilant en regard de la cheminée, la paroi latérale étant issue de l'extrémité d'entraînement.

Alors, selon une forme de réalisation avantageuse, l'enceinte de travail comporte un boîtier définissant un logement présentant une ouverture de montage pour la mise en place de l'outil de travail dans le logement, et la cheminée débouche dans le logement en regard de la paroi latérale de l'outil de travail. En alternative, le dispositif de préparation d'aliments peut notamment comporter un couvercle portant la cheminée, monté sur un récipient de travail, l'outil de travail étant agencé dans l'enceinte formée par le couvercle et le récipient de travail.

Aussi selon une forme de réalisation avantageuse, le ou l'un au moins des organes de travail externes est adjacent à un passage traversant et la paroi latérale présente une bordure circonférentielle ménageant une ouverture frontale pour l'évacuation des aliments transformés. Une telle réalisation permet de recueillir les aliments transformés à l'intérieur de l'outil de travail avant leur évacuation par l'ouverture frontale. Un outil de travail rotatif du type précité présente une rigidité limitée en comparaison avec une vis d'alimentation de hachoir ou de pressoir.

Selon une forme de réalisation avantageuse, le boîtier porte un organe de transmission monté libre en rotation et l'extrémité d'entraînement de l'outil de travail monté dans le logement vient en prise avec l'organe de transmission pour entraîner en rotation l'outil de travail. Une telle forme de réalisation permet notamment de réaliser un accessoire amovible susceptible d'être assemblé avec une base motorisée.

Selon une forme de réalisation, le dispositif de préparation d'aliments comporte une base motorisée solidaire de l'enceinte de travail et l'outil de travail monté dans l'enceinte de travail est entrainé par un moteur électrique disposé dans la base motorisée, si désiré par l'intermédiaire de l'organe de transmission. En alternative l'organe de transmission peut notamment être remplacé par un arbre d'entraînement issu d'une motorisation portée par la base motorisée.

Avantageusement alors, l'enceinte de travail est montée amovible par rapport à la base motorisée.

L'invention sera mieux comprise à l'étude d'un exemple de réalisation et de deux variantes, pris à titre nullement limitatif, illustrés dans les figures annexées, dans lesquelles :
- la figure 1 est une vue de côté en élévation et en coupe d'un exemple de réalisation d'un dispositif de préparation d'aliments selon l'invention comportant un poussoir,
- la figure 2 est une vue en perspective de l'enceinte de travail appartenant au dispositif de préparation d'aliments illustré sur la figure 1, recevant le poussoir,
- la figure 3 est une vue de dessus d'un boîtier de l'enceinte de travail illustrée sur la figure 2, sans le poussoir ni l'outil de travail rotatif,
- les figures 4 et 5 sont deux vues en perspective du poussoir du dispositif de préparation d'aliments illustré sur la figure 1, selon deux orientations différentes,
- les figures 6 et 7 sont deux vues en perspective de la face inférieure de la paroi inférieure du poussoir du dispositif de préparation d'aliments illustré sur la figure 1, selon deux orientations différentes,
- la figure 8 est une vue en perspective de la paroi inférieure du poussoir et d'une partie de l'outil de travail rotatif du dispositif de préparation d'aliments illustré sur la figure 1,
- la figure 9 est une vue de face du boîtier de l'enceinte de travail appartenant au dispositif de préparation d'aliments illustré sur la figure 1, recevant le poussoir, sans l'outil de travail rotatif,
- la figure 10 est une vue de face en coupe de l'enceinte de travail appartenant au dispositif de préparation d'aliments illustré sur la figure 1, recevant le poussoir et l'outil de travail rotatif,
- la figure 11 est une première variante de réalisation d'un poussoir appartenant à un dispositif de préparation d'aliments selon l'invention,
- la figure 12 est une deuxième variante de réalisation d'un poussoir appartenant à un dispositif de préparation d'aliments selon l'invention.

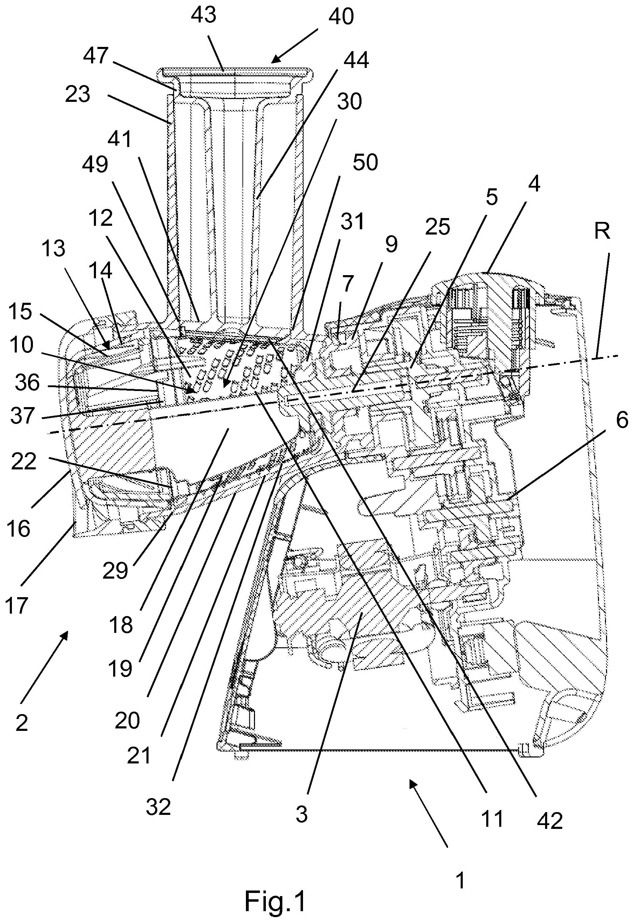

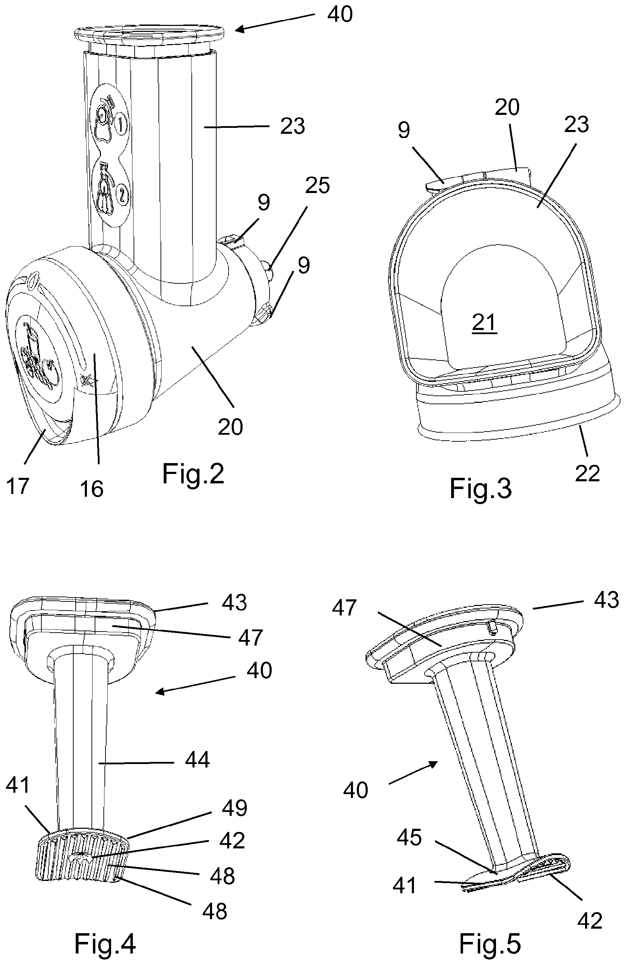

Les figures 1 à 10 illustrent un exemple de réalisation d'un dispositif de préparation d'aliments selon l'invention, comprenant un outil de travail 30 rotatif selon un axe de rotation R, une enceinte de travail 10 logeant l'outil de travail 30, et un poussoir 40. L'enceinte de travail 10 présente une cheminée 23 pour introduire les aliments à transformer. L'enceinte de travail 10 présente une sortie d'écoulement 17 prévue pour l'écoulement d'aliments liquides et/ou pulpeux, visible sur les figures 1 et 2.

Le poussoir 40 peut être déplacé dans la cheminée 23 pour pousser les aliments vers l'outil de travail 30. Le poussoir 40 comprend une paroi inférieure 41 présentant une face inférieure 42 pour pousser les aliments vers l'outil de travail 30. La paroi inférieure 41 est reliée à une partie supérieure de préhension 43 par un montant 44, la section du montant 44 étant inférieure à la section de la paroi inférieure 41.

Le dispositif de préparation d'aliments représenté sur la figure 1 comporte une base motorisée 1 et un accessoire de travail 2 amovible comportant l'outil de travail 30 entraîné en rotation. La base motorisée 1 et l'accessoire de travail 2 forment un appareil électroménager de préparation culinaire.

L'outil de travail 30 rotatif illustré sur les figures 1, 8 et 10 comporte une extrémité d'entraînement 31 et une paroi latérale 32 présentant des organes de travail externes 33 défilant en regard de la cheminée 23 et de la paroi inférieure 41 du poussoir 40. La paroi latérale 32 est issue de l'extrémité d'entraînement 31. Chacun des organes de travail externes 33 est adjacent à un passage traversant 35. La paroi latérale 32 présente une bordure circonférentielle 37 ménageant une ouverture frontale 36 pour l'évacuation des aliments transformés hors de l'outil de travail 30.

Dans l'exemple de réalisation illustré sur les figures, la paroi latérale 32 est circonférentielle et présente une géométrie tronconique. La paroi latérale 32 s'évase en direction de la bordure circonférentielle 37, pour faciliter l'évacuation des aliments transformés. A titre de variante, la paroi latérale 32 ne présente pas nécessairement une géométrie tronconique. La paroi latérale 32 peut notamment présenter une géométrie cylindrique ou une géométrie conique. La paroi latérale 32 peut notamment présenter aussi une géométrie plane.

Tel que visible sur la figure 1, la base motorisée 1 loge un moteur électrique 3 piloté par un dispositif de commande 4. Le moteur électrique 3 est relié à une sortie d'entrainement 5 si désiré par l'intermédiaire d'un dispositif de transmission 6. Le dispositif de transmission 6 peut comporter un réducteur. La vitesse de rotation de la sortie d'entraînement 5 peut être variable. De préférence, la vitesse de rotation de la sortie d'entraînement 5 se situe et/ou est incluse dans la plage de vitesses comprise entre 100 et 200 t/min.

L'accessoire de travail 2 peut être monté sur la base motorisée 1, tel que représenté sur la figure 1. L'accessoire de travail 2 est alors solidaire de la base motorisée 1. L'accessoire de travail 2 comporte à cet effet des moyens de fixation 9 prévus pour venir en prise avec des moyens de fixation complémentaires 7 de la base motorisée 1. Dans l'exemple de réalisation illustré sur les figures, les moyens de fixation 9 et les moyens de fixation complémentaires 7 sont des moyens de fixation à baïonnette, tel que visible sur les figures 1 à 3. A titre de variante, d'autres moyens de fixation peuvent être utilisés, notamment une bague de verrouillage assemblée par vissage ou par baïonnette, ou encore des crochets de retenue.

Dans l'exemple de réalisation illustré sur les figures, l'enceinte de travail 10 appartient à l'accessoire de travail 2. La base motorisée 1 est solidaire de l'enceinte de travail 10. L'outil de travail 30 monté dans l'enceinte de travail 10 est entrainé par le moteur électrique 3 disposé dans la base motorisée 1. L'enceinte de travail 10 comporte un boîtier 20 recevant l'outil de travail 30. Le boîtier 20 définit un logement 21 présentant une ouverture de montage 22 pour la mise en place de l'outil de travail 30 dans le logement 21. Le boîtier 20 présente la cheminée 23 pour l'introduction des aliments à transformer. La cheminée 23 débouche dans le logement 21 en regard de la paroi latérale 32 de l'outil de travail 30. Tel que visible sur la figure 1, le logement 21 est déversant en direction de l'ouverture de montage 22. Le boîtier 20 présente une butée inférieure 29 pour retenir l'outil de travail 30 agencé dans le logement 21. La butée inférieure 29 est formée à proximité de l'ouverture de montage 22.

Le boîtier 20 est monté amovible par rapport à la base motorisée 1. Le boîtier 20 porte les moyens de fixation 9. Le boîtier 20 porte un organe de transmission 25 monté libre en rotation. L'outil de travail 30 monté dans le boîtier 20 est entrainé par le moteur électrique 3 disposé dans la base motorisée 1 par l'intermédiaire de l'organe de transmission 25. L'axe de rotation de l'organe de transmission 25 correspond à l'axe de rotation R de l'outil de travail 30. Tel que visible sur la figure 1, l'axe de rotation de l'organe de transmission 25 est incliné vers le bas. Cette disposition permet d'améliorer le caractère déversant de l'outil de travail 30 rotatif. L'organe de transmission 25 est entraîné par la sortie d'entrainement 5 et vient en prise avec l'outil de travail 30 agencé dans le logement 21. L'organe de transmission 25 comporte une première extrémité venant en prise avec la sortie d'entraînement 5. La première extrémité est par exemple formée par un arbre de section hexagonale ou carrée. L'organe de transmission 25 comporte une deuxième extrémité agencée dans le logement 21, prévue pour entraîner en rotation l'outil de travail 30 agencé dans le logement 21. La deuxième extrémité peut comporter des ergots pour retenir l'outil de travail 30 agencé dans le logement 21. Si désiré les ergots peuvent former des crochets. Ainsi l'extrémité d'entraînement 31 de l'outil de travail 30 monté dans le logement 21 vient en prise avec l'organe de transmission 25 pour entraîner en rotation l'outil de travail 30.

Dans l'exemple de réalisation illustré sur les figures 1 à 10, l'accessoire de travail 2 comporte un organe de pressage 14. L'organe de pressage 14 est entraîné en rotation par l'outil de travail 30. De manière préférée, l'organe de pressage 14 est porté par l'outil de travail 30.

Dans l'exemple de réalisation illustré sur les figures 1 à 10, l'accessoire de travail 2 comporte un organe de filtration 15. L'organe de filtration 15 est agencé entre l'organe de pressage 14 et la sortie d'écoulement 17. L'organe de filtration 15 comporte une paroi filtrante s'étendant en regard de l'organe de pressage 14. De préférence la paroi filtrante de l'organe de filtration 15 s'étend de manière circonférentielle à partir d'une paroi de fond. La paroi filtrante est perforée et/ou ajourée de manière à laisser passer le jus et si désiré au moins une partie de la pulpe, tout en retenant les morceaux d'aliments découpés non encore pressés, ainsi que les résidus de pressage. L'organe de filtration 15 sépare l'enceinte de travail 10 en une partie amont 11 logeant l'outil de travail 30 et une partie aval 12 présentant la sortie d'écoulement 17 pour évacuer les jus résultant de la transformation des aliments. L'enceinte de travail 10 présente ainsi une restriction 13 en aval de l'outil de travail 30. La restriction 13 est formée par l'organe de pressage 14 et l'organe de filtration 15. La section de la restriction 13 est inférieure à la section de la cheminée 23. En d'autres termes, la section des passages ménagés entre l'organe de pressage 14 et l'organe de filtration 15 est inférieure à la section de la cheminée 23. L'ouverture frontale 36 de l'outil de travail 30 s'étend en regard de l'organe de filtration 15.

Dans l'exemple de réalisation illustré sur les figures 1 à 10, l'accessoire de travail 2 comporte un déflecteur 16. Le déflecteur 16 présente la sortie d'écoulement 17. Le déflecteur 16 est par exemple monté sur le boîtier 20 autour de l'ouverture de montage 22. L'organe de filtration 15 est porté par le déflecteur 16. Ainsi l'organe de filtration 15 est porté par le boîtier 20.

De manière préférée, l'accessoire de travail 2 comporte aussi un organe de raclage 18. L'organe de raclage 18 s'étend à l'intérieur de l'outil de travail 30. De manière préférée, l'organe de raclage 18 présente une arrête de raclage 19 agencée au dessus de la face interne de la paroi latérale 32 de l'outil de travail 30. Dans l'exemple de réalisation illustré sur la figure 1, l'organe de raclage 18 est porté par l'organe de filtration 15. Plus particulièrement, l'organe de raclage 18 est issu de la paroi de fond de l'organe de filtration 15. L'organe de raclage 18 et l'organe de filtration 15 peuvent ainsi être réalisés en une seule pièce. En alternative, l'organe de raclage 18 peut par exemple être rapporté sur l'organe de filtration 15. A titre de variante, l'organe de raclage 18 pourrait notamment être porté par le déflecteur 16.

Tel que visible sur la figure 1, la partie inférieure du logement 21 du boîtier 20 présente une pente déversante en direction de la partie inférieure de l'organe de filtration 15.

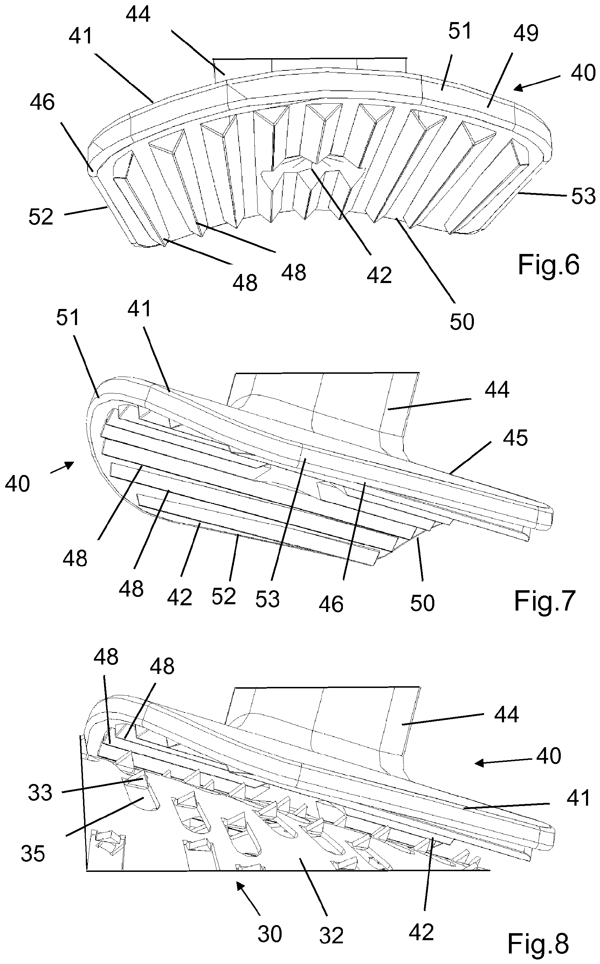

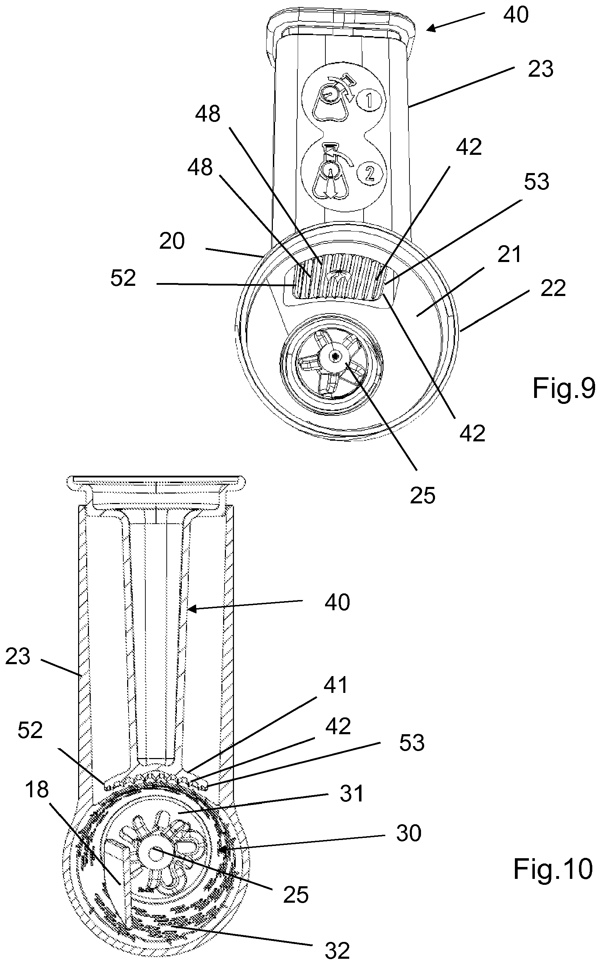

Selon une forme de réalisation préférée, la cheminée 23 présente au moins une butée latérale interne entravant la rotation du poussoir 40 introduit dans la cheminée 23. La ou au moins l'une des butées latérales internes s'étend sur toute la hauteur de la cheminée 23. Tel que mieux visible sur la figure 3, la cheminée 23 présente une section non circulaire. Dans l'exemple de réalisation illustré sur les figures, la cheminée 23 et la paroi inférieure 41 du poussoir 40 présentent chacune deux facettes de guidage en translation opposées. A cet effet la paroi inférieure 41 présente une bordure latérale 49 non circulaire, tel que bien visible sur les figures 4 et 6. La paroi inférieure 41 présente un bord antérieur 50 et un bord postérieur 51 ajustés avec la cheminée 23, tel que visible sur la figure 1. Le jeu minimal entre la cheminée 23 et la paroi inférieure 41 est agencé entre la cheminée 23 et le bord antérieur 50 et/ou le bord postérieur 51. La paroi inférieure 41 présente deux bords latéraux 52, 53 intercalés avec le bord antérieur 50 et le bord postérieur 51, tel que mieux visible sur les figures 6 et 7. Le jeu maximal entre la cheminée 23 et la paroi inférieure 41 est agencé entre la cheminée 23 et au moins l'un des bords latéraux 52, 53, tel que visible sur les figures 9 et 10. La paroi inférieure 41 du poussoir 40 présente une épaisseur inférieure au jeu maximal entre la cheminée 23 et la paroi inférieure 41. La paroi inférieure 41 du poussoir 40 présente une épaisseur supérieure au jeu minimal entre la cheminée 23 et la paroi inférieure 41, tel que visible sur la figure 1. La paroi inférieure 41 présente une bordure inférieure 46 chanfreinée au niveau du jeu maximal avec la cheminée 23, tel que visible sur les figures 6, 7 et 9.

Dans l'exemple de réalisation illustré sur les figures 1 à 10, le poussoir 40 présente une partie supérieure d'obturation 47 pouvant être déplacée en translation dans la cheminée 23 sur une hauteur supérieure à l'épaisseur de la paroi inférieure 41, et de préférence 1,5 fois supérieure à l'épaisseur de la paroi inférieure 41. Tel que visible sur les figures 1 et 10, la partie supérieure d'obturation 27 est agencée entre la partie supérieure de préhension 43 et le montant 44.

Tel que mieux visible sur les figures 4 à 10, la face inférieure 42 de la paroi inférieure 41 du poussoir 40 présente au moins un organe de retenue 48 agencé en regard de l'outil de travail 30. La face inférieure 42 du poussoir 40 prévue pour pousser les aliments vers l'outil de travail 30 présente une géométrie incurvée concave, tel que visible sur les figures 6 à 8, pour suivre le profil de la paroi latérale 32 de l'outil de travail 30. Le ou les organes de retenue 48 s'étendent longitudinalement par rapport à l'axe de rotation R de l'outil de travail 30.

Le dispositif de préparation d'aliments illustré sur les figures 1 à 10 fonctionne et s'utilise de la manière suivante.

L'utilisateur monte le boîtier 20 sur la base motorisée 1 et met en place l'outil de travail 30 dans le logement 21 du boîtier 20. L'extrémité d'entraînement 31 de l'outil de travail 30 monté dans le logement 21 vient en prise avec l'organe de transmission 25 pour entraîner en rotation l'outil de travail 30. L'utilisateur peut ensuite mettre en place l'organe de pressage 14 sur l'outil de travail 30, puis l'organe de filtration 15 et le déflecteur 16 sur le boîtier 20.

L'utilisateur peut mettre en marche le dispositif de préparation d'aliments en actionnant le dispositif de commande 4. L'outil de travail 30 agencé dans le logement 21 du boîtier 20 monté sur la base motorisée 1 est entraîné en rotation par l'organe de transmission 25. Ainsi l'outil de travail 30 monté dans l'enceinte de travail 10 est entrainé par le moteur électrique 3 par l'intermédiaire de l'organe de transmission 25. L'outil de travail 30 est de préférence entrainé à des vitesses de rotation comprises entre 100 et 200 t/min, pour obtenir un débit suffisant. Les organes de travail externes 33 défilent alors sous la base de la cheminée 23 et entament la base des aliments introduits dans la cheminée 23. L'utilisateur peut pousser les aliments dans la cheminée 23 en utilisant le poussoir 40. La restriction 13 formée par l'organe de pressage 14 tournant par rapport à l'organe de filtration 15 peut contribuer à restreindre le débit d'écoulement au travers de l'enceinte de travail 10 vers la sortie d'écoulement 17. Le niveau de liquide peut alors monter au moins dans la partie amont 11 de l'enceinte de travail 10. Le jeu maximal ménagé entre la paroi inférieure 41 du poussoir 40 et la cheminée 23 de l'enceinte de travail 10 permet une remontée de liquide dans la cheminée 23 au dessus de la paroi inférieure 41 en limitant les risques de projection hors de la cheminée 23. Le jeu minimal ménagé entre la paroi inférieure 41 et la cheminée 23 permet un guidage efficace du poussoir 40 dans la cheminée 23, qui favorise l'obtention de bonnes performances d'extraction du dispositif de préparation d'aliments.

Dans l'exemple de réalisation illustré sur les figures 1 à 10, la paroi inférieure 41 présente une face supérieure libre 45 entourant le montant 44.

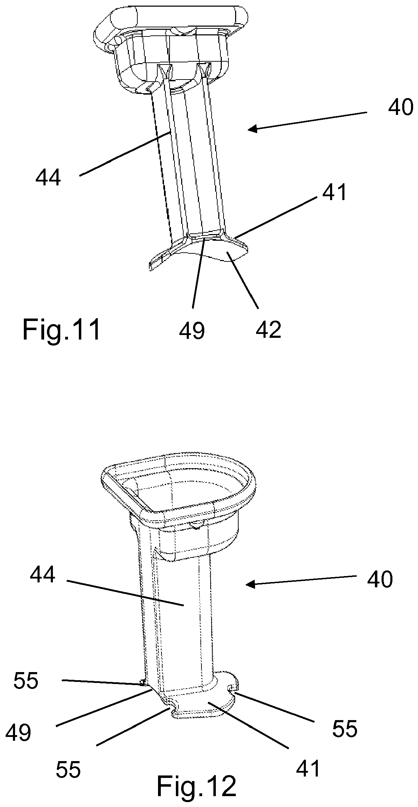

Dans les variantes de réalisation illustrées sur les figures 11 et 12, le montant 44 atteint la bordure latérale 49 de la paroi inférieure 41 du poussoir 40.

Dans l'exemple de réalisation illustré sur la figure 12, la paroi inférieure 41 présente des échancrures latérales 55 permettant des remontées de liquide au dessus de la paroi inférieure 41. Le jeu maximal entre la cheminée 23 et la paroi inférieure 41 peut alors se situer au niveau des échancrures latérales 55.

Dans l'exemple de réalisation illustré sur les figures 1 à 10, le boîtier 20 et le déflecteur 16 forment l'enceinte de travail 10 logeant l'outil de travail 30 rotatif. A titre de variante, une partie de l'enceinte de travail 10 pourrait notamment être délimitée par l'organe de filtration 15, si désiré par une partie non filtrante de l'organe de filtration 15. A titre de variante, l'enceinte de travail 10 ne comporte pas nécessairement un déflecteur 16.

A titre de variante, la restriction 13 n'est pas nécessairement formée par un organe de filtration 15 séparant l'enceinte de travail 10 en une partie amont 11 logeant l'outil de travail 30 et une partie aval 12 présentant la sortie d'écoulement 17 pour évacuer les jus résultant de la transformation des aliments. Ainsi l'enceinte de travail 10 ne comporte pas nécessairement un organe de filtration 15. La restriction 13 peut notamment être formée par un dispositif d'obturation, tel que par exemple un clapet ou un robinet, prévu pour obturer l'écoulement des jus résultant de la transformation des aliments. La restriction 13 peut ainsi être agencée au niveau de la sortie d'écoulement 17.

A titre de variante, la paroi inférieure 41 du poussoir 40 peut être reliée à la partie supérieure de préhension 43 par au moins un montant 44, la section du ou des montants 44 étant inférieure à la section de la paroi inférieure 41.

A titre de variante, l'outil de travail 30 rotatif ne comporte pas nécessairement une paroi latérale 32 présentant au moins un organe de travail externe 33 adjacent à un passage traversant 35. L'outil de travail 30 rotatif peut notamment comporter un ou plusieurs organes de travail externes tels qu'un filet pour former une vis de pressage.

A titre de variante, la cheminée 23 ne débouche pas nécessairement dans un logement d'un boîtier. Le boîtier 20 ne définit pas nécessairement un logement 21 présentant une ouverture de montage 22 pour la mise en place de l'outil de travail 30 dans le logement 21. Le boîtier peut notamment comprendre un couvercle portant la cheminée, monté sur un récipient de travail, l'outil de travail étant agencé dans l'enceinte formée par le couvercle et le récipient de travail.

A titre de variante, le boîtier 20 ne comporte pas nécessairement un organe de transmission 25 agencé entre la base motorisée 1 et l'outil de travail 30. L'extrémité d'entraînement 31 de l'outil de travail 30 peut notamment être entraînée par la sortie d'entrainement 5 de la base motorisée 1.

A titre de variante, l'accessoire de travail 2 n'est pas nécessairement amovible par rapport à la base motorisée 1. L'enceinte de travail 10 ou le boîtier 20 peut notamment être issu(e) de la base motorisée 1.

La présente invention n'est nullement limitée aux exemples de réalisation décrits, mais englobe de nombreuses modifications dans le cadre des revendications.

## Revendications

1. Dispositif de préparation d'aliments comprenant :
- un outil de travail (30) rotatif selon un axe de rotation (R),
- une enceinte de travail (10) logeant l'outil de travail (30), l'enceinte de travail (10) présentant une cheminée (23) pour introduire les aliments à transformer,
- un poussoir (40) pouvant être déplacé dans la cheminée (23) pour pousser les aliments vers l'outil de travail (30), le poussoir (40) comprenant une paroi inférieure (41) présentant une face inférieure (42) pour pousser les aliments vers l'outil de travail (30), la paroi inférieure (41) étant reliée à une partie supérieure de préhension (43) par au moins un montant (44), la section du ou des montants (44) étant inférieure à la section de la paroi inférieure (41),
**caractérisé en ce que** la paroi inférieure (41) du poussoir (40) présente une épaisseur inférieure au jeu maximal entre la cheminée (23) et la paroi inférieure (41).

2. Dispositif de préparation d'aliments selon la revendication 1, **caractérisé en ce que** l'enceinte de travail (10) présente une restriction (13) en aval de l'outil de travail (30), la section de la restriction (13) étant inférieure à la section de la cheminée (23).

3. Dispositif de préparation d'aliments selon l'une des revendications 1 ou 2, **caractérisé en ce qu'**un organe de filtration (15) sépare l'enceinte de travail (10) en une partie amont (11) logeant l'outil de travail (30) et une partie aval (12) présentant une sortie d'écoulement (17) pour évacuer les jus résultant de la transformation des aliments.

4. Dispositif de préparation d'aliments selon l'une des revendications 1 à 3, **caractérisé en ce que** le poussoir (40) présente une partie supérieure d'obturation (47) pouvant être déplacée en translation dans la cheminée (23) sur une hauteur supérieure à l'épaisseur de la paroi inférieure (41), et de préférence 1,5 fois supérieure à l'épaisseur de la paroi inférieure (41).

5. Dispositif de préparation d'aliments selon l'une des revendications 1 à 4, **caractérisé en ce que** la cheminée (23) présente au moins une butée latérale interne entravant la rotation du poussoir (40) introduit dans la cheminée (23).

6. Dispositif de préparation d'aliments selon la revendication 5, **caractérisé en ce que** la ou au moins l'une des butées latérales internes s'étend sur toute la hauteur de la cheminée (23).

7. Dispositif de préparation d'aliments selon l'une des revendications 1 à 6, **caractérisé en ce que** la cheminée (23) et la paroi inférieure (41) présentent chacune deux facettes de guidage en translation opposées.

8. Dispositif de préparation d'aliments selon l'une des revendications 1 à 7, **caractérisé en ce que** la paroi inférieure (41) présente un bord antérieur (50) et un bord postérieur (51) ajustés avec la cheminée (23), et deux bords latéraux (52, 53) intercalés avec le bord antérieur (50) et le bord postérieur (51), et **en ce que** le jeu maximal entre la cheminée (23) et la paroi inférieure (41) est agencé entre la cheminée (23) et au moins l'un des bords latéraux (52, 53).

9. Dispositif de préparation d'aliments selon l'une des revendications 1 à 8, **caractérisé en ce que** la paroi inférieure (41) présente une épaisseur supérieure au jeu minimal entre la cheminée (23) et la paroi inférieure (41).

10. Dispositif de préparation d'aliments selon l'une des revendications 1 à 9, **caractérisé en ce que** la paroi inférieure (41) présente une face supérieure libre (45) entourant le ou les montants (44).

11. Dispositif de préparation d'aliments selon l'une des revendications 1 à 10, **caractérisé en ce que** la paroi inférieure (41) présente une bordure inférieure (46) chanfreinée au niveau du jeu maximal avec la cheminée (23).

12. Dispositif de préparation d'aliments selon l'une des revendications 1 à 11, **caractérisé en ce que** la face inférieure (42) de la paroi inférieure (41) présente une géométrie incurvée concave.

13. Dispositif de préparation d'aliments selon l'une des revendications 1 à 12, **caractérisé en ce que** la face inférieure (42) de la paroi inférieure (41) présente au moins un organe de retenue (48).

14. Dispositif de préparation d'aliments selon la revendication 13, **caractérisé en ce que** le ou les organes de retenue (48) s'étendent longitudinalement par rapport à l'axe de rotation (R) de l'outil de travail (30).

15. Dispositif de préparation d'aliments selon l'une des revendications 1 à 14, **caractérisé en ce que** l'outil de travail (30) rotatif comporte une extrémité d'entraînement (31) et une paroi latérale (32) présentant au moins un organe de travail externe (33) défilant en regard de la cheminée (23), la paroi latérale (32) étant issue de l'extrémité d'entraînement (31).

16. Dispositif de préparation d'aliments selon la revendication 15, **caractérisé en ce que** l'enceinte de travail (10) comporte un boîtier (20) définissant un logement (21) présentant une ouverture de montage (22) pour la mise en place de l'outil de travail (30) dans le logement (21) et **en ce que** la cheminée (23) débouche dans le logement (21) en regard de la paroi latérale (32) de l'outil de travail (30).

17. Dispositif de préparation d'aliments selon la revendication 16, **caractérisé en ce que** le ou l'un au moins des organes de travail externes (33) est adjacent à un passage traversant (35) et **en ce que** la paroi latérale (32) présente une bordure circonférentielle (37) ménageant une ouverture frontale (36) pour l'évacuation des aliments transformés.

18. Dispositif de préparation d'aliments selon l'une des revendications 16 ou 17, **caractérisé en ce que** le boîtier (20) porte un organe de transmission (25) monté libre en rotation et **en ce que** l'extrémité d'entraînement (31) de l'outil de travail (30) monté dans le logement (21) vient en prise avec l'organe de transmission (25) pour entraîner en rotation l'outil de travail (30).

19. Dispositif de préparation d'aliments selon l'une des revendications 1 à 18, **caractérisé en ce qu'**il comporte une base motorisée (1) solidaire de l'enceinte de travail (10) et **en ce que** l'outil de travail (30) monté dans l'enceinte de travail (10) est entrainé par un moteur électrique (3) disposé dans la base motorisée (1), si désiré par l'intermédiaire de l'organe de transmission (25).

20. Dispositif de préparation d'aliments selon la revendication 19, **caractérisé en ce que** l'enceinte de travail (10) est montée amovible par rapport à la base motorisée (1).

## Patentansprüche

1. Vorrichtung zur Nahrungsmittelzubereitung, umfassend:
- ein Arbeitswerkzeug (30), das um eine Drehachse (R) drehbar ist,
- eine Arbeitskammer (10), in der das Arbeitswerkzeug (30) vorgesehen ist, wobei die Arbeitskammer (10) einen Schacht (23) zum Einführen der zu transformierenden Nahrungsmittel aufweist,
- einen Schieber (40), der in dem Schacht (23) bewegt werden kann, um Nahrungsmittel zu dem Arbeitswerkzeug (30) zu schieben, wobei der Schieber (40) eine untere Wand (41) umfasst, die eine untere Seite (42) aufweist, um die Nahrungsmittel zu dem Arbeitswerkzeug (30) zu schieben, wobei die untere Wand (41) mit einem oberen Greifteil (43) durch mindestens eine Stütze (44) verbunden ist, wobei der Querschnitt der Stütze oder Stützen (44) kleiner als der Querschnitt der unteren Wand (41) ist,
**dadurch gekennzeichnet, dass** die untere Wand (41) des Schiebers (40) eine Dicke aufweist, die kleiner als der maximale Abstand zwischen dem Schacht (23) und der unteren Wand (41) ist.

2. Vorrichtung zur Nahrungsmittelzubereitung nach Anspruch 1, **dadurch gekennzeichnet, dass** die Arbeitskammer (10) stromabwärts von dem Arbeitswerkzeug (30) eine Verengung (13) aufweist, wobei der Querschnitt der Verengung (13) kleiner als der Querschnitt des Schachts (23) ist.

3. Vorrichtung zur Nahrungsmittelzubereitung nach einem der Ansprüche 1 oder 2, **dadurch gekennzeichnet, dass** ein Filterelement (15) die Arbeitskammer (10) in einen stromaufwärtigen Teil (11), in dem das Werkzeug (30) vorgesehen ist, und einen stromabwärtigen Teil (12) unterteilt, der einen Abflussauslass (17) zum Abgeben der Säfte aufweist, die von der Verarbeitung der Nahrungsmittel stammen.

4. Vorrichtung zur Nahrungsmittelzubereitung nach einem der Ansprüche 1 bis 3, **dadurch gekennzeichnet, dass** der Schieber (40) ein oberes Verschlussteil (47) aufweist, das translatorisch in dem Schacht (23) auf eine Höhe bewegt werden kann, die größer als die Dicke der unteren Wand (41) und vorzugsweise 1,5 mal größer als die Dicke der unteren Wand (41) ist.

5. Vorrichtung zur Nahrungsmittelzubereitung nach einem der Ansprüche 1 bis 4, **dadurch gekennzeichnet, dass** der Schacht (23) mindestens einen inneren seitlichen Anschlag aufweist, der die Drehung des in den Schacht (23) eingeführten Schiebers (40) behindert.

6. Vorrichtung zur Nahrungsmittelzubereitung nach Anspruch 5, **dadurch gekennzeichnet, dass** sich der oder mindestens einer der inneren seitlichen Anschläge über die gesamte Höhe des Schachts (23) erstreckt.

7. Vorrichtung zur Nahrungsmittelzubereitung nach einem der Ansprüche 1 bis 6, **dadurch gekennzeichnet, dass** der Schacht (23) und die untere Wand (41) jeweils zwei Führungsfacetten in entgegengesetzter Translation aufweisen.

8. Vorrichtung zur Nahrungsmittelzubereitung nach einem der Ansprüche 1 bis 7, **dadurch gekennzeichnet, dass** die untere Wand (41) eine vordere Kante (50) und eine hintere Kante (51), die zu dem Schacht (23) ausgerichtet sind, und zwei seitliche Kanten (52, 53) aufweist, die zwischen der vorderen Kante (50) und der hinteren Kante (51) angeordnet sind, und dass der maximale Abstand zwischen dem Schacht (23) und der unteren Wand (41) zwischen dem Schacht (23) und mindestens einer der Seitenkanten (52, 53) angeordnet ist.

9. Vorrichtung zur Nahrungsmittelzubereitung nach einem der Ansprüche 1 bis 8, **dadurch gekennzeichnet, dass** die untere Wand (41) eine Dicke aufweist, die größer ist als der minimale Abstand zwischen dem Schacht (23) und der unteren Wand (41).

10. Vorrichtung zur Nahrungsmittelzubereitung nach einem der Ansprüche 1 bis 9, **dadurch gekennzeichnet, dass** die untere Wand (41) eine freie obere Seite (45) aufweist, die die Stütze oder Stützen (44) umgibt.

11. Vorrichtung zur Nahrungsmittelzubereitung nach einem der Ansprüche 1 bis 10, **dadurch gekennzeichnet, dass** die untere Wand (41) eine untere Kante (46) aufweist, die bei dem maximalem Abstand zu dem Schacht (23) abgeschrägt ist.

12. Vorrichtung zur Nahrungsmittelzubereitung nach einem der Ansprüche 1 bis 11, **dadurch gekennzeichnet, dass** die untere Seite (42) der unteren Wand (41) eine konkav gekrümmte Geometrie aufweist.

13. Vorrichtung zur Nahrungsmittelzubereitung nach einem der Ansprüche 1 bis 12, **dadurch gekennzeichnet, dass** die untere Seite (42) der unteren Wand (41) mindestens eine Halteeinrichtung (48) aufweist.

14. Vorrichtung zur Nahrungsmittelzubereitung nach Anspruch 13, **dadurch gekennzeichnet, dass** das eine oder die mehreren Halteeinrichtungen (48) sich in Längsrichtung in Bezug auf die Rotationsachse (R) des Arbeitswerkzeugs (30) erstrecken.

15. Vorrichtung zur Nahrungsmittelzubereitung nach einem der Ansprüche 1 bis 14, **dadurch gekennzeichnet, dass** das drehbare Arbeitswerkzeug (30) ein Antriebsende (31) und eine Seitenwand (32) aufweist, die mindestens eine äußere Arbeitseinrichtung (33) aufweist, die gegenüber dem Schacht (23) vorbeiläuft, wobei die Seitenwand (32) von dem Antriebsende (31) ausgeht.

16. Vorrichtung zur Nahrungsmittelzubereitung nach Anspruch 15, **dadurch gekennzeichnet, dass** die Arbeitskammer (10) ein Gehäuse (20) umfasst, das eine Kammer (21) definiert, die eine Anbringungsöffnung (22) für die Positionierung des Arbeitswerkzeugs (30) in der Kammer (21) aufweist, und dass der Schacht (23) in dem Gehäuse (21) gegenüber der Seitenwand (32) des Arbeitswerkzeugs (30) mündet.

17. Vorrichtung zur Nahrungsmittelzubereitung nach Anspruch 16, **dadurch gekennzeichnet, dass** die oder die mindestens eine der äußeren Arbeitseinrichtungen (33) zu einem durchgehenden Durchgang (35) benachbart ist, und dass die Seitenwand (32) eine Umfangskante (37) aufweist, in der eine vordere Öffnung (36) zum Abgeben von verarbeiteten Nahrungsmitteln vorgesehen ist.

18. Vorrichtung zur Nahrungsmittelzubereitung nach einem der Ansprüche 16 oder 17, **dadurch gekennzeichnet, dass** das Gehäuse (20) eine Transmissionseinrichtung (25) trägt, die frei drehbar angebracht ist, und dass das Antriebsende (31) des Arbeitswerkzeugs (30), das in dem Gehäuse (21) angebracht ist, mit der Transmissionseinrichtung (25) in Eingriff steht, um das Arbeitswerkzeug (30) in Rotation anzutreiben.

19. Vorrichtung zur Nahrungsmittelzubereitung nach einem der Ansprüche 1 bis 18, **dadurch gekennzeichnet, dass** sie eine motorisierte Basis (1) umfasst, die fest mit der Arbeitskammer (10) verbunden ist, und dass das Arbeitswerkzeug (30), das in der Arbeitskammer (10) angebracht ist, von einem Elektromotor (3), der in der motorisierten Basis (1) angeordnet ist, falls gewünscht über die Transmissionseinrichtung (25) angetrieben wird.

20. Vorrichtung zur Nahrungsmittelzubereitung nach Anspruch 19, **dadurch gekennzeichnet, dass** die Arbeitskammer (10) in Bezug auf die motorisierte Basis (1) entfernbar angebracht ist.

## Claims

1. Device for preparing food comprising:
- a work tool (30) rotating along a rotation axis (R),
- a work chamber (10) housing the work tool (30), the work chamber (10) having a chimney (23) for inserting food to be transformed,
- a push-button (40) which could be moved in the chimney (23) to push food towards the work tool (30), the push-button (40) comprising a lower wall (41) having a lower face (42) to push food towards the work tool (30), the lower wall (41) being connected to an upper gripping part (43) by at least one mount (44), the section of the mount(s) (44) being lower than the section of the lower wall (41),
**characterised in that** the lower wall (41) of the push-button (40) has a thickness lower than the maximum gap between the chimney (23) and the lower wall (41).

2. Device for preparing food according to claim 1, **characterised in that** the work chamber (10) has a downstream restriction (13) from the work tool (30), the section of the restriction (13) being lower than the section of the chimney (23).

3. Device for preparing food according to one of claims 1 or 2, **characterised in that** a filtering member (15) separates the work chamber (10) into an upstream part (11) housing the work tool (30) and a downstream part (12) having a flow outlet (17) to release juices resulting from the transformation of food.

4. Device for preparing food according to one of claims 1 to 3, **characterised in that** the push-button (40) has an upper blocking part (47) which could be moved forward in the chimney (23) over a height higher than the thickness of the lower wall (41), and preferably 1.5 times higher than the thickness of the lower wall (41).

5. Device for preparing food according to one of claims 1 to 4, **characterised in that** the chimney (23) has at least one internal side stopper impeding the rotation of the push-button (40) inserted in the chimney (23).

6. Device for preparing food according to claim 5, **characterised in that** the or at least one of the internal side stoppers extends over the whole height of the chimney (23).

7. Device for preparing food according to one of claims 1 to 6, **characterised in that** the chimney (23) and the lower wall (41) each have two opposite forward-guiding faces.

8. Device for preparing food according to one of claims 1 to 7, **characterised in that** the lower wall (41) has a front edge (50) and a rear edge (51) adjusted with the chimney (23), and two side edges (52, 53) interleaved with the front edge (50) and the rear edge (51), and **in that** the maximum gap between the chimney (23) and the lower wall (41) is arranged between the chimney (23) and at least one of the side edges (52,53).

9. Device for preparing food according to one of claims 1 to 8, **characterised in that** the lower wall (41) has a thickness thicker than the minimum gap between the chimney (23) and the lower wall (41).

10. Device for preparing food according to one of claims 1 to 9, **characterised in that** the lower wall (41) has a higher free face (45) surrounding the mount(s) (44).

11. Device for preparing food according to one of claims 1 to 10, **characterised in that** the lower wall (41) has a lower border (46) bevelled at the level of the maximum gap with the chimney (23).

12. Device for preparing food according to one of claims 1 to 11, **characterised in that** the lower face (42) of the lower wall (41) has a concave, curved geometry.

13. Device for preparing food according to one of claims 1 to 12, **characterised in that** the lower face (42) of the lower wall (41) has at least one holding member (48).

14. Device for preparing food according to claim 13, **characterised in that** the holding member(s) (48) extend longitudinally in relation to the rotation axis (R) of the work tool (30).

15. Device for preparing food according to one of claims 1 to 14, **characterised in that** the rotating work tool (30) comprises a drive end (31) and a side wall (32) having at least one external work member (33) scrolling opposite the chimney (23), the side wall (32) coming from the drive end (31).

16. Device for preparing food according to claim 15, **characterised in that** the work chamber (10) comprises a casing (20) defining a housing (21) having an assembly opening (22) for the implementation of the work tool (30) in the housing (21) and **in that** the chimney (23) leads to the housing (21) opposite the side wall (32) of the work tool (30).

17. Device for preparing food according to claim 16, **characterised in that** the or at least one of the external work members (33) is adjacent to a crossing passage (35) and **in that** the side wall (32) has a circumferential border (37) conserving a front opening (36) to release transformed food.

18. Device for preparing food according to one of claims 16 or 17, **characterised in that** the casing (20) supports a transmission member (25) assembled free to rotate and **in that** the drive end (31) of the work tool (30) assembled in the housing (21) grips the transmission member (25) to rotate the work tool (30).

19. Device for preparing food according to one of claims 1 to 18, **characterised in that** it comprises a motorised base (1) secured to the work chamber (10) and **in that** the work tool (30) assembled in the work chamber (10) is driven by an electric motor (3) arranged in the motorised base (1), if so desired through the intermediary of the transmission member (25).

20. Device for preparing food according to claim 19, **characterised in that** the work chamber (10) is assembled so that it can be moved in relation to the motorised base (1).
